# EUROPEAN PATENT APPLICATION

(11) **EP 4 507 256 A1**
(43) Date of publication of application: **12.02.2025**
(21) Application number: 22931469.5
(22) Date of filing: 18.03.2022
(51) Int. Cl.: H04L 27/26

(54) **DATA TRANSMISSION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); ZHANG, Zhi, Dongguan, Guangdong 523860 (CN); XU, Weijie, Dongguan, Guangdong 523860 (CN)
(74) Representative: RGTH
(86) International application number: PCT/CN2022/081817
(87) International publication number: WO 2023/173438

(57) **Abstract**

The present application relates to a data transmission method, a first device and a second device, where the method includes: performing, by the first device, channel listening, and performing channel occupation in a case where a result of the channel listening is that a channel is idle; and transmitting, by the first device, a first signal to a second device during a first channel occupation time; where the first signal is used by the second device to generate a second signal, and the second device is a zero-power consumption device. By adopting the present application, a data transmission based on the zero-power consumption device is implemented in a case of using an unlicensed spectrum.

## Description

### TECHNICAL FIELD

The present application relates to the field of communication, and in particular, to a data transmission method, a first device, and a second device.

### BACKGROUND

Zero-power consumption devices are widely applied in a cellular communication system due to their characteristics of low cost, low complexity and low power consumption. The use of an unlicensed frequency band is also an important deployment scenario in the cellular communication system. How to implement a data transmission based on a zero-power consumption device in a case of using an unlicensed spectrum is a problem that needs to be solved.

### SUMMARY

Embodiments of the present application provide a data transmission method, a first device, and a second device, which may implement a data transmission based on a zero-power consumption device in a case of using an unlicensed spectrum.

The embodiments of the present application provide a data transmission method, applied to a first device, and the method includes:
performing, by the first device, channel listening, and performing channel occupation in a case where a result of the channel listening is that a channel is idle; and
transmitting, by the first device, a first signal to a second device during a first channel occupation time; where the first signal is used by the second device to generate a second signal, and the second device is a zero-power consumption device.

The embodiments of the present application provide a data transmission method, applied to a second device, and the method includes:
receiving, by the second device, a first signal transmitted by a first device; and
obtaining, by the second device, a second signal according to the first signal during a first channel occupation time; where the second device is a zero-power consumption device.

The embodiments of the present application provide a first device, including:
a first processing unit, configured to perform channel listening, and perform channel occupation in a case where a result of the channel listening is that a channel is idle; and
a first transmitting unit, configured to transmit a first signal to a second device during a first channel occupation time; where the first signal is used by the second device to generate a second signal, and the second device is a zero-power consumption device.

The embodiments of the present application provide a second device, including:
a third receiving unit, configured to receive a first signal transmitted by a first device; and
a second processing unit, configured to obtain a second signal according to the first signal during a first channel occupation time; where the second device is a zero-power consumption device.

The embodiments of the present application provide a first device, including a processor and a memory. The memory is configured to store a computer program, and the processor is configured to invoke and execute the computer program stored in the memory, to cause the first device to perform the method described above in the embodiments of the present application.

The embodiments of the present application provide a second device, including a processor and a memory. The memory is configured to store a computer program, and the processor is configured to invoke and execute the computer program stored in the memory, to cause the second device to perform the method described above in the embodiments of the present application.

The embodiments of the present application provide a chip, configured to implement the method described above in the embodiments of the present application.

Specifically, the chip includes: a processor, configured to invoke and execute a computer program from a memory, to cause a device equipped with the chip to perform the method described above in the embodiments of the present application.

The embodiments of the present application provide a computer-readable storage medium. The computer-readable storage medium is configured to store a computer program, and the computer program, when being executed by a device, causes the device to perform the method described above in the embodiments of the present application.

The embodiments of the present application provide a computer program product, including computer program instructions, and the computer program instructions cause a computer to perform the method described above in the embodiments of the present application.

The embodiments of the present application provide a computer program, and the computer program, when being executed on a computer, causes the computer to perform the method described above in the embodiments of the present application.

In the embodiments of the present application, the first device performs channel listening, and may perform channel occupation if a result of the channel listening is that the channel is idle. The first device transmits the first signal to the second device during the first channel occupation time. The first signal is used by the second device to generate the second signal. The second device is a zero-power consumption device. By adopting the embodiments of the present application, in a case of using an unlicensed spectrum, if the channel is idle, the channel occupation is performed. The first device is a zero-power consumption device that does not require battery power, and a data transmission may be implemented between the first device and the second device through back scattering communication. Thus, the data transmission based on the zero-power consumption device is implemented in the case of using the unlicensed spectrum.

### BRIEF DESCRIPTION OF THE DRAWINGS

FIG. 1 is a schematic diagram of an application scenario according to the embodiments of the present application.
FIG. 2 is a schematic diagram of a cellular-based zero-power consumption system according to the embodiments of the present application.
FIG. 3 is a schematic diagram of a zero-power consumption system using cellular direct connection with auxiliary energy supply according to the embodiments of the present application.
FIG. 4 is a schematic diagram of implementing back scattering based on a passive electronic tag according to an embodiment of the present application.
FIG. 5 is another schematic diagram of implementing back scattering based on a passive electronic tag according to an embodiment of the present application.
FIG. 6 is a schematic diagram of implementing energy harvesting based on a passive electronic tag according to an embodiment of the present application.
FIG. 7 is a schematic diagram of a resistance load modulation circuit of a passive electronic tag according to an embodiment of the present application.
FIG. 8 is a schematic diagram of an application scenario of implementing zero-power consumption communication between a base station and a zero-power consumption device according to a data transmission method of an embodiment of the present application.
FIG. 9 is a schematic flow chart of a data transmission method according to an embodiment of the present application.
FIG. 10 is a schematic flow chart of a data transmission method according to an embodiment of the present application.
FIG. 11 is a schematic flow chart of a data transmission method according to an embodiment of the present application.
FIG. 12 is a schematic flow chart of a data transmission method according to an embodiment of the present application.
FIG. 13 is a schematic flow chart of a data transmission method according to an embodiment of the present application.
FIG. 14 is a schematic flow chart of a data transmission method according to an embodiment of the present application.
FIG. 15 is a communication schematic diagram of an example of a data transmission method according to an embodiment of the present application.
FIG. 16 is a schematic diagram of a zero-power consumption communication system of an example of a data transmission method according to an embodiment of the present application.
FIG. 17 is a schematic diagram of a zero-power consumption communication system of an example of a data transmission method according to an embodiment of the present application.
FIG. 18 is a schematic diagram of communication implemented based on a plurality of carrier transmitting devices of an example of a data transmission method according to an embodiment of the present application.
FIG. 19 is a communication schematic diagram of another example of a data transmission method according to an embodiment of the present application.
FIG. 20 is a communication schematic diagram of another example of a data transmission method according to an embodiment of the present application.
FIG. 21 is a communication schematic diagram of another example of a data transmission method according to an embodiment of the present application.
FIG. 22 is a schematic block diagram of a first device according to an embodiment of the present application.
FIG. 23 is a schematic block diagram of a second device according to an embodiment of the present application.
FIG. 24 is a schematic block diagram of a communication device according to the embodiments of the present application.
FIG. 25 is a schematic block diagram of a chip according to the embodiments of the present application.
FIG. 26 is a schematic block diagram of a communication system according to the embodiments of the present application.

### DETAILED DESCRIPTION

The technical solutions in the embodiments of the present application will be described below with reference to the accompanying drawings in the embodiments of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc., and the embodiments of the present application may also be applied to these communication systems.

Optionally, the communication system in the embodiments of the present application may be applied to a carrier aggregation (CA) scenario, may also be applied to a dual connectivity (DC) scenario, and may also be applied to a standalone (SA) network deployment scenario.

Optionally, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STAION, ST) in the WLAN, may be a cellular phone, a cordless phone, a Session Initiation Protocol (SIP) phone, a Wireless Local Loop (WLL) station, or a personal digital processing (Personal Digital Assistant, PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present application, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc., these small cells have characteristics of small coverage range and low transmission power, which are applicable for providing a data transmission service with high speed.

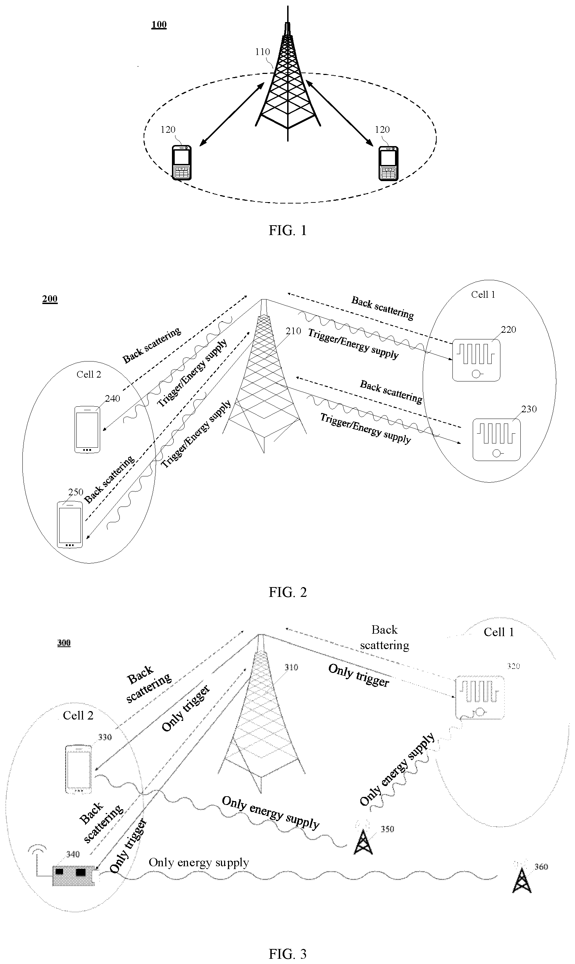

FIG. 1 exemplarily shows a communication system 100. The communication system includes one network device 110 and two terminal devices 120. Optionally, the communication system 100 may include multiple network devices 110, and other numbers of terminal devices 120 may be included within a coverage range of each network device 110, which is not limited by the embodiments of the present application.

Optionally, the communication system 100 may also include other network entities such as a mobility management entity (MME), and an access and mobility management function (AMF), etc., which is not limited by the embodiments of the present application.

Herein, the network device may also include an access network device and a core network device. That is, the wireless communication system also includes multiple core networks for communicating with the access network device. The access network device may be an evolutional base station (evolutional node B, referred to as eNB or e-NodeB for short), a macro base station, a micro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or an authorized auxiliary access long-term evolution (LAA-LTE) system.

It should be understood that in the embodiments of the present application, a device with a communication function in the network/system may be referred to as a communication device. Taking the communication system shown in FIG. 1 as an example, the communication device may include a network device and a terminal device with the communication function. The network device and the terminal device may be specific devices in the embodiments of the present application, which will not be repeated herein. The communication device may also include other devices in the communication system, such as a network controller, a mobility management entity, and other network entities, which are not limited by the embodiments of the present application.

It should be understood that the terms "system" and "network" herein are often used interchangeably herein. The term "and/or" herein is only an associated relationship for describing associated objects, meaning that there may be three kinds of relationships, for example, A and/or B may mean three cases where: A exists alone, both A and B exist, and B exists alone. In addition, the character "/" herein generally means that associated objects before and after "/" are in an "or" relationship.

It should be understood that the "indication" mentioned in the embodiments of the present application may be a direct indication, an indirect indication, or may also represent having an associated relationship. For example, A indicates B, which may mean that A directly indicates B, for example, B may be acquired by A; may also mean that A indirectly indicates B, for example, A indicates C, and B may be acquired by C; may also mean that there is an associated relationship between A and B.

In the description of the embodiments of the present application, the term "corresponding" may mean that there is a direct correspondence or indirect correspondence between two objects, may also mean that there is an associated relationship between two objects, or may also mean relationships between "indicating" and "being indicated", between "configuring" and "being configured", etc.

To facilitate the understanding of the technical solutions of the embodiments of the present application, the relevant technologies of the embodiments of the present application are described below. The following relevant technologies as optional solutions may be arbitrarily combined with the technical solutions of the embodiments of the present application, which all belong to the protection scope of the embodiments of the present application.

With the rapid development of the communication technology, relevant industry applications adapted to various Internet of Things communication technologies have emerged, but there are still a large number of application scenarios whose related needs have not been well met, including but not limited to the following scenarios:
(1) Some Internet of Things scenarios in harsh communication environments, may face extreme environments with such as high temperature, extremely low temperature, high humidity, high pressure, high radiation or high-speed motion, such as an ultra-high voltage power station, track monitoring of a train with high-speed motion, environment monitoring of a high-cold area, a industrial production line, etc. In these scenarios, existing Internet of Things terminals will not work due to the working environment limitations of conventional power supplies. In addition, the extreme working environment is not conducive to the maintenance of the Internet of Things, such as replacing batteries.
(2) Internet of Things scenarios with a requirement of very small size terminal form, such as food traceability, commodity flow, and smart wearables, etc., require terminals to have extremely small sizes, to facilitate the use in these scenarios. For example, Internet of Things terminals used for commodity management on the flow chain usually use the form of electronic tags, which need to be embedded in the commodity packaging in a very small form; for example, lightweight wearable devices may improve the user experience while meeting the user needs, so the size of the wearable devices needs to be designed to be smaller and lighter.
(3) For Internet of Things scenarios that meet the requirement of extremely low-cost Internet of Things communication, for example, logistics or warehousing scenarios, in order to facilitate the management of a large number of items in the flow, an Internet of Things terminal may be attached to each item, so that accurate management of the entire process and the entire cycle of logistics is completed through communication between the terminals and the logistics network. The cost of Internet of Things terminals needs to be cheap enough, thereby improving competitiveness with respect to other alternative technologies.

Internet of Things communication scenarios represented by the above scenarios require support for Internet of Things communication terminals having characteristics of battery-free, ultra-low power consumption, extremely small size, and extremely low cost. Existing Internet of Things communication technologies are difficult to meet these needs. However, the zero-power consumption communication technology using energy harvesting and back scattering is expected to become a new generation of Internet of Things communication technology, due to its excellent performance such as extremely low power consumption, extremely small size, and extremely low cost, etc., thereby solving the communication needs of Internet of Things-related application scenarios.

FIG. 2 exemplarily shows a cellular-based zero-power consumption communication system 200. The zero-power consumption communication system 200 includes: one network device and cellular users located in different cells, for example, in a cell 1, there are two cellular users (for example a terminal device 220 - a terminal device 230) evenly distributed around the network device 210 (for example a base station), and in a cell 2, there are also two cellular users (for example a terminal device 240 - a terminal device 250) evenly distributed around the network device 210 (for example a base station). Optionally, the zero-power consumption communication system 200 may also include multiple network devices, and a coverage range of each network device may include other numbers of multiple terminal devices, which is not limited to the embodiments of the present application.

The terminal device 220, the terminal device 230, the terminal device 240, and the terminal device 250 may be zero-power consumption devices, which do not need to carry batteries, where the terminal device 220 and the terminal device 230 may directly use tags based on a radio frequency identification (RFID) technology. The RFID tags are also referred to as "radio frequency tags" or "electronic tags". Specifically, passive electronic tags (or referred to as passive-type electronic tags) are used, since they support back scattering, they may also be referred to as back scattering tags. The terminal device 240 and the terminal device 250 may be zero-power consumption devices including passive electronic tags. For example, the passive electronic tags may be arranged inside the terminal device 240 and the terminal device 250, or may be attached to the outside of the terminal device 240 and the terminal device 250, and so on. Herein, the terminal device 240 and the terminal device 250 may be mobile phones, and at least one of the terminal device 240 and the terminal device 250 may also be a signal receiver, which is not limited to these types, as long as the terminal device may implement the back scattering, it is within the protection scope of the present application.

As shown in FIG. 2, the zero-power consumption communication system 200 adopts a communication mode of cellular direct connection, that is, the network device and the zero-power consumption device communicate directly. Before the communication, the zero-power consumption device needs to receive a wireless energy supply signal for energy harvesting, to acquire the energy required for working. Correspondingly, the network device transmits the wireless energy supply signal and a trigger signal to the zero-power consumption device. Herein, the wireless energy supply signal is used to provide energy to the zero-power consumption device, and may be a carrier signal transmitted by the network device; the trigger signal may adopt the same carrier signal as the wireless energy supply signal, and the carrier signal may carry control information or data information, etc., transmitted to the zero-power consumption device. The zero-power consumption device modulates the carrier signal to obtain a back scattering signal, and transmits the back scattering signal to the network device by back scattering.

FIG. 3 exemplarily shows another cellular-based zero-power consumption communication system 300. The zero-power consumption communication system 300 includes: one network device, cellular users located in different cells and a third-party device for energy supply. For example, in a cell 1, there is a cellular user (for example a terminal device 320) distributed around the network device 310 (for example a base station), and in a cell 2, there are two cellular users (for example a terminal device 330 - a terminal device 340) evenly distributed around the network device 210 (for example a base station). Optionally, the zero-power consumption communication system 300 may also include multiple network devices, and the coverage range of each network device may include another number of multiple terminal devices, and the third-party device may be one or more, such as an energy supply node 350 that supplies energy to the terminal device 320 and the terminal device 330, and an energy supply node 360 that supplies energy to the terminal device 340, which is not limited to the embodiments of the present application.

The terminal device 320, the terminal device 330, and the terminal device 340 may be zero-power consumption devices, which do not need to carry batteries by themselves. Herein, the terminal device 320 may directly use an RFID tag, which is also referred to as a "radio frequency tag" or "electronic tag", specifically, use a passive electronic tag (or referred to as a passive-type electronic tag), and since it supports back scattering, it may also be referred to as a back scattering tag. The terminal device 330 and the terminal device 340 may be zero-power consumption devices including passive electronic tags. For example, the passive electronic tags may be arranged inside the terminal device 330 and the terminal device 340, or attached to the outside of the terminal device 330 and the terminal device 340, and so on. Herein, the terminal device 330 may be a mobile phone, and the terminal device 340 may be a signal receiver, the types of these terminal devices are not limited thereto, as long as the terminal devices may implement back scattering, they are within the protection scope of the present application.

If the third-party device is an energy supply node, the third-party device may be a base station, a mobile phone, a relay node, a customer premise equipment (CPE) or the like in the network. If necessary, a dedicated energy supply node may also be deployed. The wireless communication signals (such as synchronization signals, broadcast signals, data channels, etc.) transmitted by these energy supply nodes may be used to provide wireless energy supply for zero-power consumption devices, or, based on a reasonable scheduling mode, these energy supply nodes may also transmit dedicated wireless energy supply signals.

As shown in FIG. 3, the zero-power consumption communication system 300 adopts a cellular direct connection communication mode with auxiliary energy supply, that is: the zero-power consumption device may not only obtain wireless energy supply from the network device communicating with the zero-power consumption device, but also obtain energy supply from the third-party device. Before the communication, the zero-power consumption device needs to receive the wireless energy supply signal transmitted by the third-party device, to obtain energy in the wireless energy supply mode, for energy harvesting, thereby acquiring energy required for working. Considering that the strength of the energy supply signal reaching the terminal device needs to meet a certain threshold, such as -20dBm or -30dBm, which results in the energy supply signal transmitted by the network device covering a smaller range, generally within a few tens of meters to 100 meters, in the case where the transmission power of the energy supply signal is limited. From the perspective of the coverage of the cellular cell, the coverage range of the wireless energy supply is much smaller than the coverage range of the data transmission signal. More energy supply nodes are needed to implement the wireless energy supply, in order to significantly improve the coverage range of the wireless energy supply, thereby improving the cell coverage of the zero-power consumption communication as much as possible. To this end, other nodes in the network besides the network device (for example, the base station) may be used for wireless energy supply. For example, the energy supply node that may be used includes a mobile phone, relay node, CPE, etc., in the network. If necessary, a dedicated energy supply node may also be deployed. These energy supply nodes transmit wireless energy supply signals to the zero-power consumption devices, and the network device transmits trigger signals to the zero-power consumption devices. Herein, the wireless energy supply signal is used to provide energy to the zero-power consumption device, and may be a carrier signal; the trigger signal may adopt a different carrier signal from the wireless energy supply signal, and the carrier signal may carry control information or data information transmitted to the zero-power consumption device. The zero-power consumption device modulates the carrier signal to obtain a back scattering signal, and transmits the back scattering signal to the network device by back scattering.

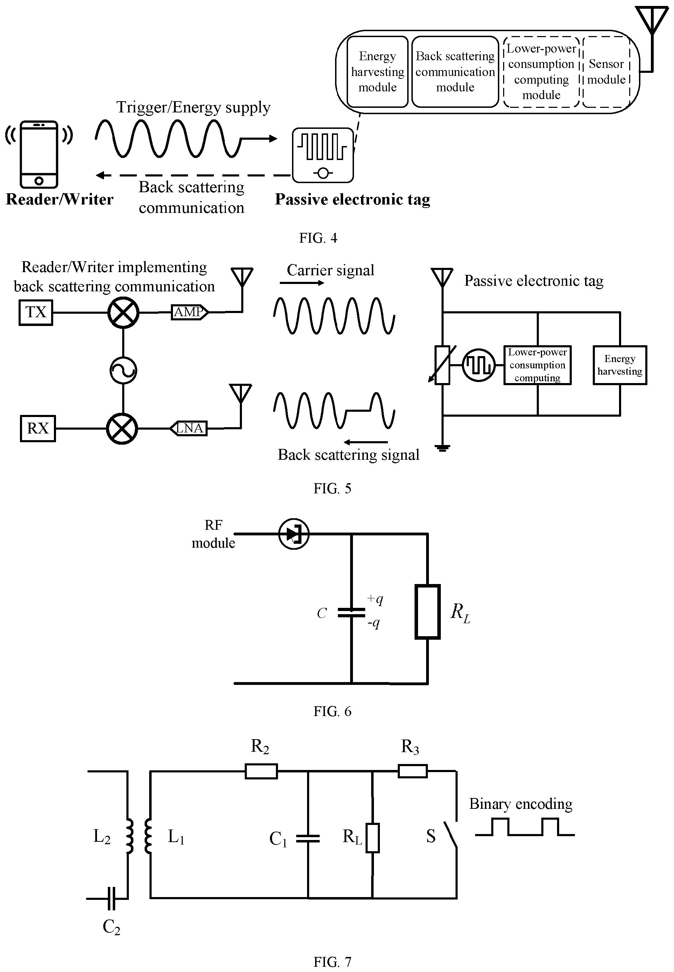

As shown in FIG. 4, the zero-power consumption device is the above-mentioned passive electronic tag, or the zero-power consumption device may include the above-mentioned passive electronic tag. The passive electronic tag includes an energy harvesting module (for energy harvesting), a back scattering communication module (for back scattering communication), a low-power consumption computing module (for low-power consumption computing) and a sensor module (for data collecting and reporting), where the low-power consumption computing module and the sensor module are optional modules. The network device (including but not limited to arranging a reader/writer in the network device, or the network device supporting the reading and writing processing performed by the reader/writer) transmits an energy supply signal (for example, a radio wave) to the zero-power consumption device, which may provide the zero-power consumption device with energy required for working. Specifically, the zero-power consumption device may harvest energy carried by the radio wave in space by the energy harvesting module, so as to drive the back scattering communication module, the low-power consumption computing module and the sensor module to work, by the energy harvesting module, and finally to implement back scattering communication. The zero-power consumption device obtains energy required for working and may also receive a trigger signal (for example, a control command transmitted by the arranged reader/writer) transmitted by the network device, and the zero-power consumption device responds to the trigger signal and establishes back scattering communication with the network device in the back scattering mode. For example, the zero-power consumption device may receive downlink data transmitted by the network device and may also transmit uplink data requested by the network device, where the transmitted uplink data may come from data stored by the zero-power consumption device itself (for example, an identity identification or pre-written information, such as a production date, a brand, a manufacturer of the product, etc.).

As shown in FIG. 5, the zero-power consumption device is the above-mentioned passive electronic tag, or the zero-power consumption device may include the above-mentioned passive electronic tag. The passive electronic tag receives a carrier signal, harvests energy by an energy harvesting module, to supply energy to a low-power consumption computing module by the energy harvesting module, and performs back scattering communication after modulating the carrier signal.

As shown in FIG. 6, the zero-power consumption device is the above-mentioned passive electronic tag, or the zero-power consumption device may include the above-mentioned passive electronic tag. The passive electronic tag uses an energy harvesting module (denoted as an RF module) to harvest electromagnetic wave energy in space through electromagnetic induction, and then drives a load circuit (a load circuit including a capacitor and a resistor), so that the energy harvesting module drives the back scattering communication module, the low-power consumption computing module and the sensor module to work, thereby implementing back scattering communication finally.

As shown in FIG. 7, load modulation is an adjustment method for the passive electronic tag to transmit data to the reader/writer. Specifically, the load modulation changes the magnitude and phase of the impedance of the passive electronic tag, by adjusting an electrical parameter of an oscillation circuit of the passive electronic tag according to the rhythm of a data stream, thereby completing the modulation procedure. The load modulation mainly has two adjustment methods: resistive load modulation and capacitive load modulation. Herein, in the resistive load modulation, the load is connected in parallel with a resistor, referred to as a load modulation resistor, the resistor is turned on and off according to a clock of the data stream, and the on and off of a switch S are controlled by binary data encoding. In the capacitive load modulation, compared to the resistive load modulation, the load is connected in parallel with a capacitor, replacing the load modulation resistor controlled by the binary data encoding in FIG. 7.

It should be pointed out that when the above-mentioned zero-power consumption device transmits data, the encoding may use different forms of codes to represent binary "1" and "0" (or, use different pulse signals to represent 0 and 1). The wireless radio frequency identification system may use one of the following encoding methods: Non Return Zero (NRZ) encoding, Manchester encoding, Unipolar RZ encoding, Differential Bi-Phase (DBP) encoding, Miller encoding with differential encoding.

Regarding the classification of zero-power consumption devices, based on energy sources and usage methods of the zero-power consumption devices, the zero-power consumption devices may be divided into the following types:

### (1) Passive zero-power consumption device

The zero-power consumption device does not need an internal battery, and when the zero-power consumption device is close to a network device (such as a reader/writer of the RFID system), the zero-power consumption device is within a near field range formed by antenna radiation of the network device. Therefore, an antenna of the zero-power consumption device generates an induced current by electromagnetic induction, and the induced current drives the low-power consumption chip circuit of the zero-power consumption device. Tasks such as demodulation of a forward link signal and modulation of a backward link signal, etc., are implemented. For the back scattering link, the zero-power consumption device uses the back scattering mode to transmit data.

It may be seen that the passive zero-power consumption device does not need an internal battery to drive either the forward link or the backward link, and is a truly zero-power consumption device. The passive zero-power consumption device does not need a battery, and a radio frequency circuit and a baseband circuit of the passive zero-power consumption terminal both are very simple, for example, does not need a low-noise amplifier (LNA), a power amplifier(PA), a crystal oscillator, an analog-to-digital converter (ADC), etc., therefore, the passive zero-power consumption device has many advantages, such as small size, light weight, very cheap price, and long service life, etc.

### (2) Semi-passive zero-power consumption device

The semi-passive zero-power consumption device is not equipped with a conventional battery itself, but may use an RF energy harvesting module to harvest radio wave energy, and at the same time, store the harvested energy in an energy storage unit (such as a capacitor). The energy storage unit, after obtaining the energy, may drive the low-power consumption chip circuit of the zero-power consumption device. Tasks such as demodulation of a forward link signal and modulation of a backward link signal, etc., are implemented. For a back scattering link, the zero-power consumption device uses the back scattering mode to transmit data.

It may be seen that the semi-passive zero-power consumption device does not need an internal battery to drive either the forward link or the backward link. Although the energy stored in the capacitor is used in the operation, the energy comes from the radio energy harvested by the energy harvesting module, therefore, the semi-passive zero-power consumption device is also a truly zero-power consumption device. The semi-passive zero-power consumption device inherits many of advantages of the passive zero-power consumption device, so they have many advantages, such as small size, light weight, very cheap price, and long service life, etc.

### (3) Active zero-power consumption device

The zero-power consumption device used in some scenarios may also be an active zero-power consumption device, this type of zero-power consumption device may have an internal battery. The battery is used to drive a low-power consumption chip circuit of the zero-power consumption device. Tasks such as demodulation of a forward link signal and modulation of a backward link signal, etc., are implemented. However, for a back scattering link, the zero-power consumption device uses the back scattering mode to transmit data. Therefore, this type of zero-power consumption device is mainly reflected in the fact that the signal transmission of the backward link does not need the device's own power, but uses the mode of back scattering.

The active zero-power consumption device has an internal battery for supplying power, to increase the communication distance of the zero-power consumption device and improve the reliability of the communication. It is applied in some scenarios with relatively high requirements on the communication distance, the reading latency, etc.

To sum up, considering that there are more and more types of connected objects and application scenarios in the Internet of Things, in order to implement the interconnection of all things and avoid the problem of high power consumption caused by the traditional terminal device requiring battery power in the cellular network, at least one of the above-mentioned types of zero-power consumption devices is selected according to communication needs of Internet of Things-related applications in the cellular network. Due to not relying on the traditional active power amplifier transmitter, energy may be harvested by the energy harvesting module, and the harvested energy is used to drive a low-power consumption chip circuit, which greatly reduces the complexity of the hardware, and moreover, the zero-power consumption device does not actively transmit signals, but implements back scattering communication by adjusting the received carrier signal. Therefore, using the zero-power consumption device with battery-free may implement back scattering communication with battery-free and zero-power consumption, which not only meets the communication needs of the Internet of Things-related application scenarios, but also reduces the investment cost of the Internet of Things-related communication system.

The unlicensed spectrum is a spectrum divided by countries and regions that may be used for communication of radio devices, and the spectrum is generally considered to be a shared spectrum, that is, as long as communication devices in different communication systems meet regulatory requirements set on the spectrum by countries or regions, the communication device may use the spectrum, without applying to the government for a dedicated spectrum license. In order to enable the friendly coexistence of various communication systems that use the unlicensed spectrum for wireless communication on the spectrum, some countries or regions have specified regulatory requirements that must be met for the use of the unlicensed spectrum. For example, in the European region, the communication device follows a "Listen-Before-Talk (LBT)" principle, that is, the communication device, before transmitting a signal on a channel of the unlicensed spectrum, needs to first perform channel listening, and the communication device can transmit a signal, only when a channel listening result is "channel idle"; if the channel listening result of the communication device on the channel of the unlicensed spectrum is "channel busy", the communication device can not transmit a signal. In addition, in order to ensure fairness, during one transmission, the duration of the signal transmission using the channel of the unlicensed spectrum by the communication device cannot exceed a maximum channel occupancy time (MCOT).

The above-mentioned unlicensed spectrum technology may be used in the cellular communication system. For example, the NR-U technology of 3GPP Rel-16 uses the unlicensed frequency band below 7 GHz. In subsequent technological evolution, the use of this unlicensed spectrum technology in a higher frequency band (for example 52.6 GHz to 71 GHz discussed in the Rel-17 standard) will be considered.

Considering that if this unlicensed spectrum technology is used on the higher frequency band, there will be problems such as high cost, high complexity, and high power consumption, etc. However, the zero-power consumption device has excellent performance such as low cost, low complexity and low power consumption, etc. By combining this unlicensed spectrum technology with the zero-power consumption device to implement data transmission based on the zero-power consumption device, these problems may be solved. It is necessary to implement data transmission based on the zero-power consumption device in the case of using the unlicensed spectrum, in the Internet of Things (for example passive Internet of Things) based on the cellular communication system.

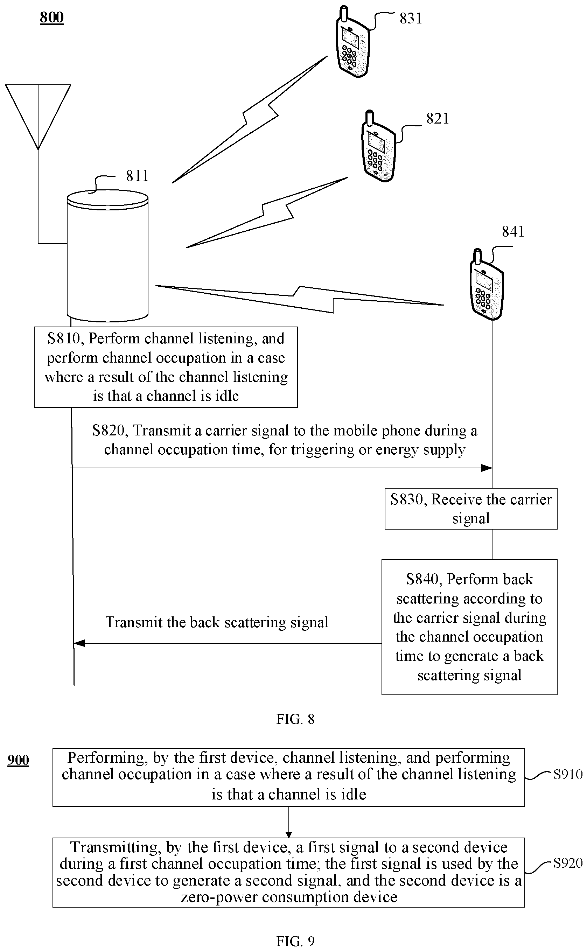

FIG. 8 is a schematic diagram of another application scenario according to the embodiments of the present application, which exemplarily shows a data transmission method 800 of the embodiments of the present application. Taking an example where the carrier transmitting device is a base station and the zero-power consumption device is a mobile phone, a base station 811 communicates with a mobile phone 821, a mobile phone 831 and a mobile phone 841. One or more of the mobile phones 821, 831 and 841 are mobile phones including passive electronic tags. Taking the data transmission between the base station 811 and the mobile phone 841 (i.e., the mobile phone including the passive electronic tag) as an example, a process of the data transmission includes some or all of the following steps.

S810, performing, by the base station 811, channel listening, and performing channel occupation in a case where a result of the channel listening is that a channel is idle.

S820, transmitting, by the base station 811, a carrier signal to the mobile phone 841 during a channel occupation time, where the carrier signal is used by the mobile phone 841 to perform back scattering according to the carrier signal, to generate a back scattering signal.

In some examples, the carrier signal transmitted by the base station 811 includes: a trigger signal for triggering back scattering communication (the trigger signal carries a terminal identification), and an energy supply signal, so that the mobile phone 841 receives the energy supply signal to obtain energy required for working. The mobile phone 841 receives the trigger signal and obtains the terminal identification carried in the trigger signal. The mobile phone 841 identifies that the terminal identification is the terminal device's own identification, thereby triggering back scattering communication.

S830, the mobile phone 841 receives the carrier signal transmitted by the base station 811.

S840, the mobile phone 841 performs back scattering according to the carrier signal during the channel occupation time to generate a back scattering signal, and transmits the back scattering signal to the base station 811.

There is no necessary sequential relationship between the steps S810 to S840, and some of the steps may be selected to be performed as needed, and there is no need to perform the above steps in sequence.

The data transmission implemented based on back scattering between the above-mentioned base station and the mobile phone is only an example. The embodiments of the present application are not limited to this example, and may be a data transmission between multiple devices in other scenarios of the Internet of Things, for example, a data transmission between one intelligent control center and multiple terminal devices in an Internet of Things warehousing scenario, etc.

FIG. 9 is a schematic flow chart of a data transmission method 900 according to an embodiment of the present application. The method may optionally be applied to the system shown in FIG. 1, but is not limited thereto. The method includes at least some of the following content.

S910, performing, by the first device, channel listening, and performing channel occupation in a case where a result of the channel listening is that a channel is idle.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the first device may be the carrier transmitting device. Before transmitting a signal on a channel of an unlicensed spectrum, the carrier transmitting device needs to perform channel listening first. If the channel listening result of the carrier transmitting device on the channel of the unlicensed spectrum is "channel idle", the carrier transmitting device can perform the following transmission of the first signal. If the channel listening result of the carrier transmitting device on the channel of the unlicensed spectrum is "channel busy", the carrier transmitting device cannot perform the following transmission of the first signal.

S920, transmitting, by the first device, a first signal to a second device during a first channel occupation time; where the first signal is used by the second device to generate a second signal, and the second device is a zero-power consumption device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the second device may be the zero-power consumption device. Taking an example of being applied to the passive Internet of Things, the zero-power consumption device includes the passive electronic tag, or the passive electronic tag is used as the zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

There is no necessary sequential relationship between the steps S910 to S920, and some of the steps may be selected to be performed as needed, and there is no need to perform the above steps in sequence.

By adopting the embodiments of the present application, in the case of using the unlicensed spectrum, if the channel is idle, the channel occupation is performed. The first device is a zero-power consumption device that does not require battery power, and the data transmission may be implemented between the first device and the second device by back scattering communication. Thus, the data transmission based on the zero-power consumption device is implemented in the case of using the unlicensed spectrum.

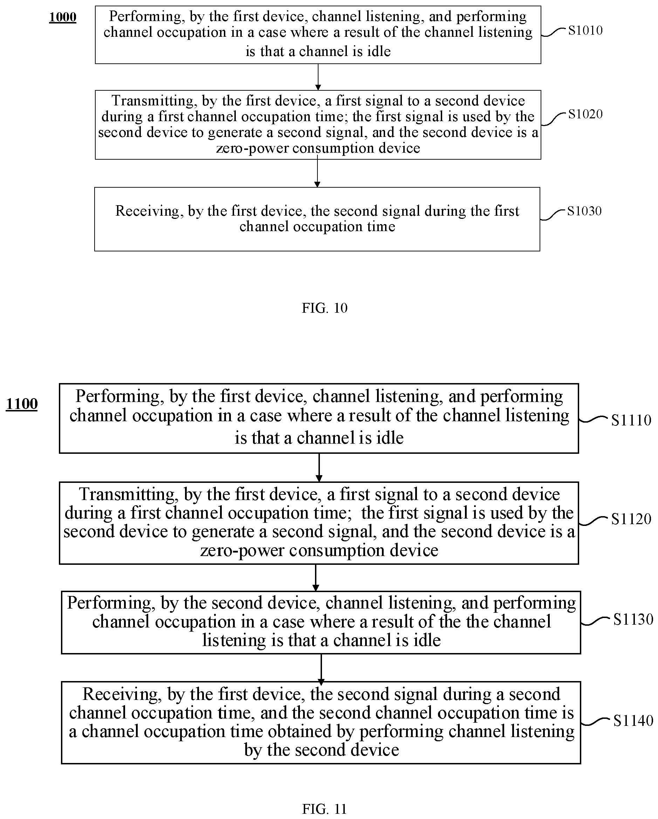

FIG. 10 is a schematic flow chart of a data transmission method 1000 according to an embodiment of the present application. The method may optionally be applied to the system shown in FIG. 1, but is not limited thereto. The method includes at least some of the following content.

S1010, performing, by the first device, channel listening, and performing channel occupation in a case where a result of the channel listening is that a channel is idle.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the first device may be the carrier transmitting device. Before transmitting a signal on a channel of an unlicensed spectrum, the carrier transmitting device needs to perform channel listening first. If the channel listening result of the carrier transmitting device on the channel of the unlicensed spectrum is "channel idle", the carrier transmitting device can perform the following transmission of the first signal. If the channel listening result of the carrier transmitting device on the channel of the unlicensed spectrum is "channel busy", the carrier transmitting device cannot perform the following transmission of the first signal.

S1020, transmitting, by the first device, a first signal to a second device during a first channel occupation time; where the first signal is used by the second device to generate a second signal, and the second device is a zero-power consumption device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the first channel occupation time is a channel occupation time acquired based on channel listening of the first device or periodic channel listening.

In some examples, the second device may be a zero-power consumption device. Taking an example of being applied to the passive Internet of Things, the zero-power consumption device includes a passive electronic tag, or the passive electronic tag is used as a zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

S1030, receiving, by the first device, the second signal during the first channel occupation time.

In some examples, the first device may be the carrier transmitting device, and the second device may be the zero-power consumption device. The carrier transmitting device and the zero-power consumption device are on the same channel (e.g., a first channel). The zero-power consumption device does not need to perform channel listening, only the carrier transmitting device needs to perform channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal, and the back scattering signal is transmitted in the same channel as the carrier signal, that is: the back scattering signal and the carrier signal are both transmitted in the first channel, so that the carrier transmitting device receives the back scattering signal during the first channel occupation time.

There is no necessary sequential relationship between the steps S1010 to S1030, and some of the steps may be selected to be performed as needed, and there is no need to perform the above steps in sequence.

FIG. 11 is a schematic flow chart of a data transmission method 1100 according to an embodiment of the present application. The method may optionally be applied to the system shown in FIG. 1, but is not limited thereto. The method includes at least some of the following content.

S1110, performing, by the first device, channel listening, and performing channel occupation in a case where a result of the channel listening is that a channel is idle.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the first device may be the carrier transmitting device. Before transmitting a signal on a channel of an unlicensed spectrum, the carrier transmitting device needs to perform channel listening first. If the channel listening result of the carrier transmitting device on the channel of the unlicensed spectrum is "channel idle", the carrier transmitting device can perform the following transmission of the first signal. If the channel listening result of the carrier transmitting device on the channel of the unlicensed spectrum is "channel busy", the carrier transmitting device cannot perform the following transmission of the first signal.

S1120, transmitting, by the first device, a first signal to a second device during a first channel occupation time; where the first signal is used by the second device to generate a second signal, and the second device is a zero-power consumption device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the second device may be a zero-power consumption device. Taking an example of being applied to the passive Internet of Things, the zero-power consumption device includes a passive electronic tag, or the passive electronic tag is used as a zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

In some examples, the first channel occupation time is a channel occupation time acquired based on channel listening of the first device or periodic channel listening.

S1130, performing, by the second device, channel listening, and performing channel occupation in a case where a result of the channel listening is that a channel is idle.

S1140, receiving, by the first device, the second signal during a second channel occupation time, and the second channel occupation time is a channel occupation time obtained by performing channel listening by the second device.

In some examples, the second channel occupation time is a channel occupation time acquired based on the channel listening of the second device or periodic channel listening.

In some examples, the first device may be the carrier transmitting device, and the second device may be the zero-power consumption device. The carrier transmitting device performs channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal. In a process where the zero-power consumption device generates the back scattering signal, it is back scattered to a second channel different from the first channel. The zero-power consumption device also needs channel listening, and when the channel listening result is "channel idle", the zero-power consumption device occupies the second channel, that is: the back scattering signal is transmitted on a channel different from the carrier signal. The carrier signal is transmitted on the first channel, and the back scattering signal is transmitted on the second channel, so that the carrier transmitting device receives the back scattering signal during the second channel occupation time.

There is no necessary sequential relationship between the steps S1110 to S1140, and some of the steps may be selected to be performed as needed, and there is no need to perform the above steps in sequence.

In a possible implementation, the method further includes: transmitting, by the first device, first information related to the first channel occupation time to the second device. Herein, the first information includes: at least one of a type of the channel listening, a channel priority, a total length of a channel occupation time, and a remaining length of the channel occupation time.

For example, based on the data transmission method illustrated in FIG. 9, the first information may be channel occupation time (COT) information, the first device may be the carrier transmitting device, and the second device may be the zero-power consumption device. After the carrier transmitting device transmits the COT information to the zero-power consumption device, the zero-power consumption device needs to ensure that the second signal (e.g., the back scattering signal) transmitted by back scattering according to the first signal (e.g., the carrier signal) needs to be completed within the COT. Then, according to the COT information, it is facilitated that the zero-power consumption device transmits the back scattering signal by back scattering, such as selecting a transmission time interval, determining a data block size, a modulation method, and a data rate, etc.

In a possible implementation, the second signal includes request information reported by the second device. The request information includes: at least one of a scheduling request, a transmission duration, a data volume, a data cache status, and power control information of the first signal.

For example, based on the data transmission method illustrated in FIG. 9 or FIG. 10, the first device may be the carrier transmitting device, and the second device may be the zero-power consumption device. The carrier transmitting device periodically occupies the channel by the periodic channel listening, to receive the request information, and the zero-power consumption device transmits the request information to the carrier transmitting device.

In a possible implementation, the first signal carries control information, where the control information includes: at least one of a terminal identification, terminal group identification information, and a first device identification.

The first device may be the carrier transmitting device, and there may be one or more carrier transmitting devices. Taking into account the existence of multiple carrier transmitting devices, the zero-power consumption device needs to be able to identify multiple first signals, for example, a target carrier signal that needs to be responded to among multiple carrier signals. That is, the zero-power consumption device needs to compare the control information with the device's own identification, to identify the target carrier signal from the multiple carrier signals transmitted by the multiple carrier transmitting devices, and then, obtain the back scattering signal according to the target carrier signal.

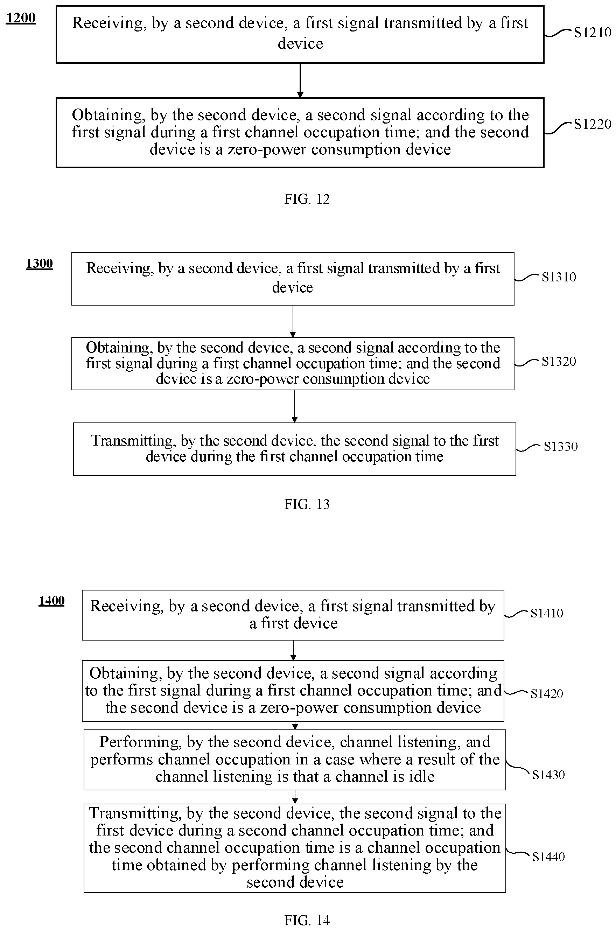

FIG. 12 is a schematic flow chart of a data transmission method 1200 according to an embodiment of the present application. The method may optionally be applied to the system shown in FIG. 1, but is not limited thereto. The method includes at least some of the following content.

S1210, receiving, by a second device, a first signal transmitted by a first device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the second device may be the zero-power consumption device. Taking an example of being applied to the passive Internet of Things, the zero-power consumption device includes the passive electronic tag, or the passive electronic tag is used as the zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

In some examples, the first device may be the carrier transmitting device, the second device may be the zero-power consumption device, and the first signal may be the carrier signal. The carrier transmitting device transmits the carrier signal to the zero-power consumption device, so that the zero-power consumption device, after receiving the carrier signal, may obtain the back scattering signal according to the carrier signal.

S1220, obtaining, by the second device, a second signal according to the first signal during a first channel occupation time; and the second device is a zero-power consumption device.

In some examples, the first device may be the carrier transmitting device, and the second device may be the zero-power consumption device. The carrier transmitting device performs channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal.

By adopting the embodiments of the present application, in the case of using the unlicensed spectrum, if the channel is idle, the channel occupation is performed. The first device is the zero-power consumption device that does not require battery power, and the data transmission may be implemented between the first device and the second device by back scattering communication, thereby implementing the data transmission based on the zero-power consumption device in the case of using the unlicensed spectrum.

FIG. 13 is a schematic flow chart of a data transmission method 1300 according to an embodiment of the present application. The method may optionally be applied to the system shown in FIG. 1, but is not limited thereto. The method includes at least some of the following content.

S1310, receiving, by a second device, a first signal transmitted by a first device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the second device may be the zero-power consumption device. Taking an example of being applied to the passive Internet of Things, the zero-power consumption device includes the passive electronic tag, or the passive electronic tag is used as the zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

In some examples, the first device may be the carrier transmitting device, the second device may be the zero-power consumption device, and the first signal may be the carrier signal. The carrier transmitting device transmits the carrier signal to the zero-power consumption device, so that the zero-power consumption device, after receiving the carrier signal, may obtain the back scattering signal according to the carrier signal.

S1320, obtaining, by the second device, a second signal according to the first signal during a first channel occupation time; and the second device is a zero-power consumption device.

In some examples, the first device may be the carrier transmitting device, and the second device may be the zero-power consumption device. The carrier transmitting device performs channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal.

In some examples, the first channel occupation time is a channel occupation time acquired based on channel listening of the first device or periodic channel listening.

S1330, transmitting, by the second device, a second signal to the first device during the first channel occupation time.

In some examples, the first device may be the carrier transmitting device, and the second device may be the zero-power consumption device. The carrier transmitting device and the zero-power consumption device are on the same channel (e.g., a first channel). The zero-power consumption device does not need to perform channel listening, only the carrier transmitting device needs to perform channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time, so that the zero-power consumption device transmits the second signal to the first device during the first channel occupancy time. Herein, in a case where the first signal is a carrier signal, the second signal is a back scattering signal obtained by modulating based on the carrier signal, and the back scattering signal is transmitted in the same channel as the carrier signal, that is: the back scattering signal and the carrier signal are both transmitted in the first channel, and the zero-power consumption device transmits the back scattering signal to the carrier transmitting device during the first channel occupancy time.

There is no necessary sequential relationship between the steps S1310 to S1330, and some of the steps may be selected to be performed as needed, and there is no need to perform the above steps in sequence.

FIG. 14 is a schematic flow chart of a data transmission method 1400 according to an embodiment of the present application. The method may optionally be applied to the system shown in FIG. 1, but is not limited thereto. The method includes at least some of the following content.

S1410, receiving, by a second device, a first signal transmitted by a first device.

In some examples, the first device may be the carrier transmitting device, for example at least one of a network device transmitting the carrier signal (e.g., a base station), a terminal device transmitting the carrier signal (e.g., a mobile phone), and a device dedicated for generating the carrier signal.

In some examples, the second device may be the zero-power consumption device. Taking an example of being applied to the passive Internet of Things, the zero-power consumption device includes the passive electronic tag, or the passive electronic tag is used as the zero-power consumption device. By the passive electronic tag, the zero-power consumption device may not only implement the data transmission with the carrier transmitting device based on back scattering communication on the channel of the unlicensed spectrum, but also meet the data transmission requirement of the zero-power consumption.

In some examples, the first device may be the carrier transmitting device, the second device may be the zero-power consumption device, and the first signal may be the carrier signal. The carrier transmitting device transmits the carrier signal to the zero-power consumption device, so that the zero-power consumption device, after receiving the carrier signal, may obtain the back scattering signal according to the carrier signal.

S1420, obtaining, by the second device, a second signal according to the first signal during a first channel occupation time; and the second device is a zero-power consumption device.

In some examples, the first device may be the carrier transmitting device, and the second device may be the zero-power consumption device. The carrier transmitting device performs channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal.

S1430, performing, by the second device, channel listening, and performs channel occupation in a case where a result of the channel listening is that a channel is idle.

S1440, transmitting, by the second device, a second signal to the first device during a second channel occupation time; and the second channel occupation time is a channel occupation time obtained by performing channel listening by the second device.

In some examples, the second channel occupation time is a channel occupation time acquired based on channel listening of the second device or periodic channel listening.

In some examples, the first device may be the carrier transmitting device, and the second device may be the zero-power consumption device. The carrier transmitting device performs channel listening on the channel of the unlicensed spectrum. When the channel listening result is "channel idle", the carrier transmitting device occupies the first channel and transmits the first signal to the second device during the first channel occupation time, so that the zero-power consumption device, after receiving the first signal transmitted by the carrier transmitting device, obtains the second signal according to the first signal during the first channel occupation time. Herein, in a case where the first signal is a carrier signal, the second signal is a back scattering signal obtained by modulating based on the carrier signal. In a process where the zero-power consumption device generates the back scattering signal, it is back scattered to a second channel different from the first channel. The zero-power consumption device also needs channel listening, and when the channel listening result is "channel idle", the zero-power consumption device occupies the second channel, that is: the back scattering signal is transmitted on a channel different from the carrier signal. The carrier signal is transmitted on the first channel, and the back scattering signal is transmitted on the second channel, and the zero-power consumption device transmits the back scattering signal to the carrier transmitting device during the second channel occupation time.

There is no necessary sequential relationship between the steps S1410 to S1440, and some of the steps may be selected to be performed as needed, and there is no need to perform the above steps in sequence.

In a possible implementation, the method further includes: receiving, by the second device, first information related to the first channel occupation time transmitted by the first device; the first information includes: at least one of a type of channel listening, a channel priority, a total length of a channel occupation time, and a remaining length of the channel occupation time.

For example, based on the data transmission method illustrated in FIG. 13, the first information may be COT information, the first device may be the carrier transmitting device, and the second device may be the zero-power consumption device. After the carrier transmitting device transmits the COT information to the zero-power consumption device, the zero-power consumption device needs to ensure that the second signal (e.g., the back scattering signal) transmitted by back scattering according to the first signal (e.g., the carrier signal) needs to be completed within the COT. Then, after the zero-power consumption device receives the COT information, according to the COT information, it is facilitated that the zero-power consumption device transmits the back scattering signal by back scattering, such as selecting a transmission time interval, determining a data block size, a modulation method, and a data rate, etc.

In a possible implementation, the method further includes: determining second information according to the first information;
where the second information includes: at least one of selecting a transmission time interval, determining a data block size, a modulation method, and a data rate.

For example, based on the data transmission method illustrated in FIG. 13 or 14, the first device may be the carrier transmitting device, and the second device may be the zero-power consumption device. The first information may be the COT information transmitted by the carrier transmitting device to the zero-power consumption device. After receiving the COT information, the zero-power consumption device may determine the second information based on the COT information, and the second information may be included in the back scattering signal.

In a possible implementation, the second signal includes request information reported by the second device. The request information includes: at least one of a scheduling request, a transmission duration, a data volume, a data cache status, and power control information of the first signal.

For example, based on the data transmission method illustrated in FIG. 13 or FIG. 14, the first device may be the carrier transmitting device, and the second device may be the zero-power consumption device. The carrier transmitting device periodically occupies the channel by periodic channel listening, to receive the request information, and the zero-power consumption device transmits the request information to the carrier transmitting device.

In a possible implementation, obtaining, by the second device, the second signal according to the first signal during the first channel occupation time, includes: obtaining, by the second device, control information from the received first signal; determining the first signal as a target signal, in a case where the second device identifies that the control information matches the second device itself; and obtaining, by the second device, the second signal according to the target signal.

In some examples, the control information includes: at least one of a terminal identification, terminal group identification information, and a first device identification.

In some examples, the first device may be the carrier transmitting device, and there may be one or more carrier transmitting devices. Taking into account the existence of multiple carrier transmitting devices, the zero-power consumption device needs to be able to identify multiple first signals, for example, a target carrier signal that needs to be responded to among multiple carrier signals. That is, the zero-power consumption device needs to compare the control information with the device's own identification, to identify the target carrier signal from the multiple carrier signals transmitted by the multiple carrier transmitting devices, and then, obtain the back scattering signal according to the target carrier signal.

The following is a detailed description of the data transmission method provided by the above embodiments of the present application.

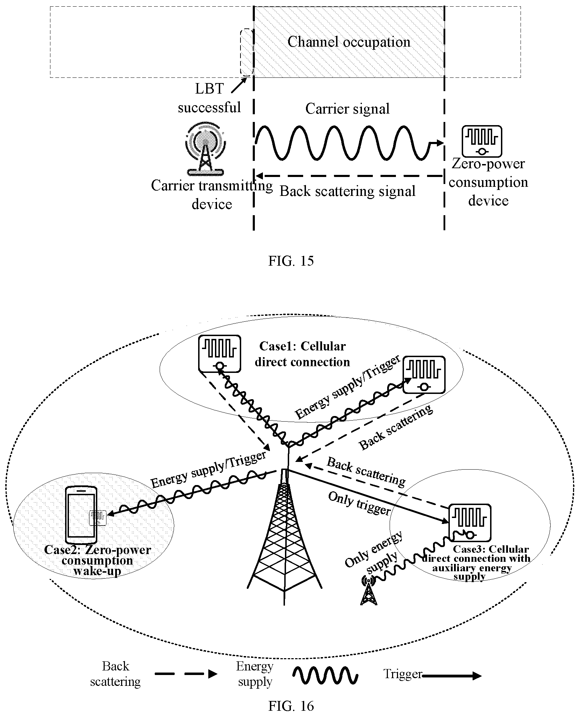

FIG. 15 is a communication diagram of an example of a data transmission method according to an embodiment of the present application. As shown in FIG. 15, the method includes: adopting, by the carrier transmitting device, an LBT mechanism to perform channel listening, and if the LBT is successful, that is, the channel listening result is that the channel is idle, performing channel occupation. The carrier transmitting device transmits the carrier signal to the zero-power consumption device during the channel occupation time. The zero-power consumption device obtains a back scattering signal by adjusting based on the carrier signal. The zero-power consumption device transmits the back scattering signal to the carrier transmitting device during the channel occupation time, so that the carrier transmitting device receives the back scattering signal during the channel occupation time.

The carrier transmitting device mentioned above may be a device that communicates with the zero-power consumption device. In a cellular communication system, the carrier transmitting device may be: a base station, a mobile phone, a device dedicated for generating the carrier signal in the network, or the like. In a non-cellular communication system, for example a wireless local area network (WLAN), the carrier transmitting device may also be: an access point (AP), a station (STA), or a device dedicated for generating the carrier signal in the WLAN network. Herein, the AP refers to a wireless access point, as a creator of the WLAN, and is a central node of the WLAN network. A wireless router used in a general home or office is an AP; each terminal device connected to the WLAN network (such as a laptop, a PDA, and other user devices that may connect to the Internet) may be referred to as an STA.

The above-mentioned zero-power consumption device has the characteristics of power saving, low complexity and low cost. The zero-power consumption device may store certain information. The zero-power consumption device, when receiving the carrier signal and being triggered, transmits the stored information out by back scattering (i.e., by modulating based on the carrier signal and transmitting the back scattering signal obtained by the modulating to the carrier transmitting device), thereby implementing the communication based on the zero-power consumption device, and implementing the data transmission between the carrier transmitting device and the zero-power consumption device.

The above-mentioned LBT mechanism means that: in the case of using the unlicensed spectrum, the LBT mechanism needs to be followed, that is, Listen-Before-Talk. The carrier transmitting device, before transmitting the carrier signal on the channel of the unlicensed spectrum, needs to perform channel listening first. Only when the channel listening result is that the channel is idle, the carrier transmitting device can perform the transmission of the carrier signal.

Generally, the zero-power consumption device does not perform LBT, and the LBT is performed by the carrier transmitting device, that is, the zero-power consumption device does not perform channel listening, and the carrier transmitting device performs the channel listening. If the zero-power consumption device back scatters to another channel different from the channel on which the carrier signal is located, the zero-power consumption device is required to perform the LBT. At this time, the zero-power consumption device also needs to perform the channel listening. Herein, the zero-power consumption device does not need to perform the LBT before the back scattering.

In one case, since the carrier signal and the back scattering signal are on the same channel and the back scattering signal is obtained by modulating based on the carrier signal, the back scattering signal may be regarded as a part of the carrier signal, and the carrier signal and the back scattering signal may be regarded as the same signal. In this case, the carrier transmitting device performs LBT, and if the LBT is successful, the carrier transmitting device preempts the first channel, and transmits the carrier signal to the zero-power consumption device during the first channel occupation time, and the carrier transmitting device receives the back scattering signal during the first channel occupation time. The zero-power consumption device does not perform LBT.

In another case, the carrier signal and the back scattering signal are on different channels, and the carrier signal and the back scattering signal may be regarded as different signals. In this case, the carrier transmitting device performs LBT. If the LBT is successful, the carrier transmitting device preempts the first channel and transmits the carrier signal to the zero-power consumption device during the first channel occupation time. The carrier transmitting device, after using the first channel for a period of time, shares the first channel with the zero-power consumption device for use, thereby implementing channel sharing between the carrier transmitting device and the zero-power consumption device. Although they are different devices and they are different signals, after seizing the first channel, the carrier transmitting device may share the first channel occupation time with the zero-power consumption device after preempting the first channel, that is, the transmission of the back scattering signal by the zero-power consumption device actually shares the channel occupation time obtained by LBT by the carrier transmitting device, and the zero-power consumption device does not perform the LBT.

For implementing channel sharing between the carrier transmitting device and the zero-power consumption device, a channel access mode similar to Type2C may be adopted. Specifically, in the NR-U technology, for example, the carrier transmitting device is a base station, and the zero-power consumption device is a zero-power consumption device including a passive electronic tag. When the base station initiates the channel sharing, in addition to using resources within the channel occupation time for downlink transmission, resources within the channel occupation time may also be shared with the zero-power consumption device for uplink transmission. When the resources within the channel occupation time are shared with the zero-power consumption device for uplink transmission, the channel access mode that may be used by the zero-power consumption device includes at least one of Type2A channel access, Type2B channel access or Type2C channel access. Herein, in a case of the Type2C channel access, the zero-power consumption device does not need LBT and directly performs back scattering, and the zero-power consumption device may directly perform the transmission. Considering that the NR-U system defines that: under a shared channel, if LBT is not performed, there is a limitation on a transmission duration of 584 per second, then a gap size between a starting location of the transmission and an end location of the previous transmission is: less than or equal to 16 µs, and the length of the transmission does not exceed 584 µs. However, the embodiments of the present application are not limited by the Type2C channel access mode. Since back scattering depends on the transmission of the carrier signal, if the carrier signal is not interrupted, the transmission duration of the back scattering may not be limited by the Type2C channel access mode, and the transmission may be continued as long as the channel occupation time has not been expired.

FIG. 16 is a schematic diagram of a zero-power consumption communication system of an example of a data transmission method according to an embodiment of the present application. The carrier transmitting device is a base station, and the zero-power consumption device is a zero-power consumption device including a passive electronic tag. As shown in FIG. 16, the following three schemes are included:
(1) Cellular direct connection: in Case 1, the base station and the zero-power consumption device communicate directly. The carrier signal, in addition to being used to trigger back scattering (also referred to as a trigger signal), may also be used to supply energy, to provide the zero-power consumption device with energy required for working. At this time, the carrier signal and the energy supply signal are the same signal. The base station transmits the carrier signal to the zero-power consumption device, the carrier signal may carry control information transmitted to the zero-power consumption device, and the zero-power consumption device transmits information to the base station by back scattering.
(2) Zero-power consumption wake-up: in Case 2, the zero-power consumption device completes some low-power consumption operations as a part of the traditional terminal, thereby helping to implement energy saving for the traditional terminal. For example, the zero-power consumption device may be used as a wake-up receiver (Wake-Up Radio, WUR) of the traditional terminal.
(3) Cellular direct connection with auxiliary functions: in Case 3, other energy supply nodes in the network other than the base station are used to supply power, to provide the zero-power consumption device with energy required for working. At this time, the carrier signal and the energy supply signal are different signals. Other energy supply nodes other than the base station may include a smartphone, a relay node, a CPE, etc., in the network. If necessary, a dedicated energy supply node may also be deployed. The traditional wireless communication signals (such as synchronization signals, broadcast signals, data channels, etc.) transmitted by these energy supply nodes may be used to provide the zero-power consumption device with energy required for working, or, based on a reasonable scheduling mode, these energy supply nodes may also transmit dedicated energy supply signals.

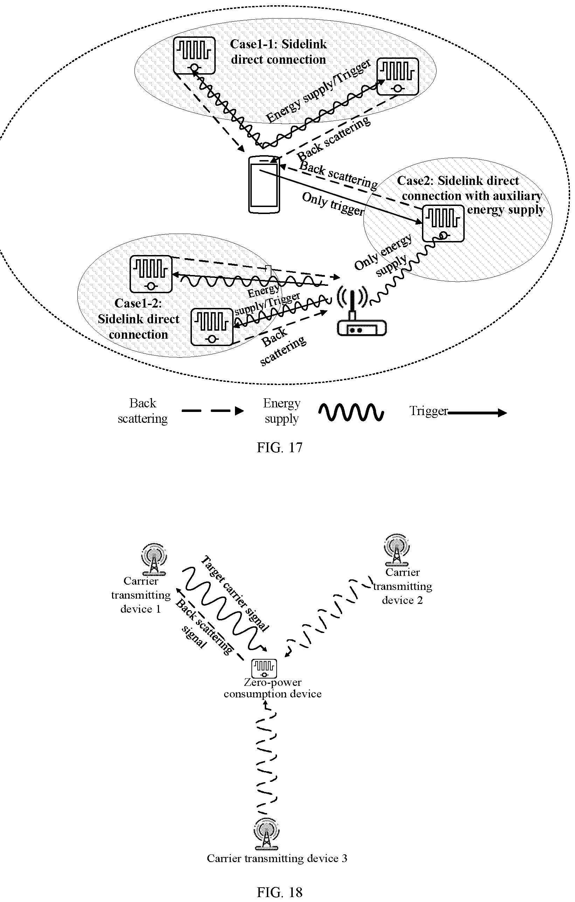

FIG. 17 is a schematic diagram of a zero-power consumption communication system of an example of a data transmission method according to an embodiment of the present application. As shown in FIG. 17, the zero-power consumption communication based on sidelink communication (Sidelink) may implement sidelink communication between the zero-power consumption device and another type of smart device (such as a smart phone, a CPE or other IoT terminal devices). The sidelink communication may carry out direct connection communication without relying on the cellular network, and the sidelink communication includes the following communication modes:
(1) Direct connection of sidelink communication: the zero-power consumption device and a smart device (using the smart device as the carrier transmitting device) directly perform sidelink communication. The carrier signal, in addition to being used to trigger back scattering (also referred to as the trigger signal), may also be used to supply power, to provide the zero-power consumption device with energy required for working. At this time, the carrier signal and the energy supply signal are the same signal. The smart device transmits the carrier signal to the zero-power consumption device, and the zero-power consumption device transmits information to the smart device by back scattering to implement the sidelink communication. Herein, the smart device may be a mobile phone in Case 1-1 or a control node (such as a CPE) in Case 1-2.
(2) Direct connection of sidelink communication assisted to provide the carrier: in order to implement sidelink communication direct connection between the zero-power consumption device and the smart device, other energy supply nodes in the network other than the mobile phone are used for energy supply, to provide the zero-power consumption device with energy required for working. At this time, the carrier signal and the energy supply signal are different signals. The energy supply signal may not directly come from the smart device (the smart device may be a mobile phone in Case 2), but from a third-party device. As shown in Case 2, the energy supply signal required for the sidelink communication direct connection between the zero-power consumption device and the smart device may come from the control node (such as the CPE). The zero-power consumption device receives the carrier signal transmitted by the smart device and transmits information to the smart device by back scattering.

The carrier transmitting device, when succeeding in LBT, preempts the channel and transmits the carrier signal to the carrier signal during the channel sharing time. The back scattering of the zero-power consumption device is based on the carrier signal. That is, for the zero-power consumption device, its back scattering relies on the carrier signal for energy supply and generating the back scattering signal. However, in the case where there are multiple carrier transmitting devices, the zero-power consumption device does not only receive a target carrier signal transmitted by a target carrier transmitting device communicating with it, but also receives other carrier signals transmitted by other carrier transmitting devices other than the target carrier transmitting device. FIG. 18 is a schematic diagram of communication implemented based on a plurality of carrier transmitting devices according to an example of a data transmission method according to an embodiment of the present application. As shown in FIG. 18, it includes: 3 carrier transmitting devices (for example carrier transmitting device 1 to carrier transmitting device 3) and 1 zero-power consumption device. The three carrier transmitting devices may all transmit carrier signals, but not all of these carrier signals are related to the zero-power consumption device, and the channel occupation times obtained after these carrier transmitting devices preempt channels are also not all the channel occupation times that may be used by the zero-power consumption device. Therefore, the zero-power consumption device needs to determine which carrier signal to respond to, in order to implement back scattering. In other words, it is necessary to determine a target carrier signal corresponding to back scattering, for example, the zero-power consumption device identifies the carrier of the carrier transmitting device 1 as the target carrier, and performs back scattering by the target carrier.

In some examples, the carrier signals corresponding to different zero-power consumption devices may be different in at least one of time domain resources or frequency domain resources. The zero-power consumption devices only need to perform back scattering according to the carrier signal on the corresponding time-frequency resources.

In some examples, the carrier signal may carry control information, for example, identification information, recognition information, sounding information, and the like, where the identification information may be at least one of a terminal identification, terminal group identification information, or an identification of the carrier transmitting device. For example, in a process of determining the target carrier signal corresponding to back scattering, the zero-power consumption device may identify the target carrier signal from multiple carrier signals transmitted by multiple carrier transmitting devices, according to the comparison of the control information with the device's own identification, and then, obtain the back scattering signal according to the target carrier signal. Optionally, by modulating the carrier signal to carry the control information, the zero-power consumption device determines the target carrier signal by the control information received on the carrier signal, such as the terminal identification.

In some examples, the control information may also be carried on a channel or a signal other than the carrier signal, and the zero-power consumption device determines the target carrier signal by the control information (such as the identification of the target carrier signal) received on the channel or signal other than the carrier signal.

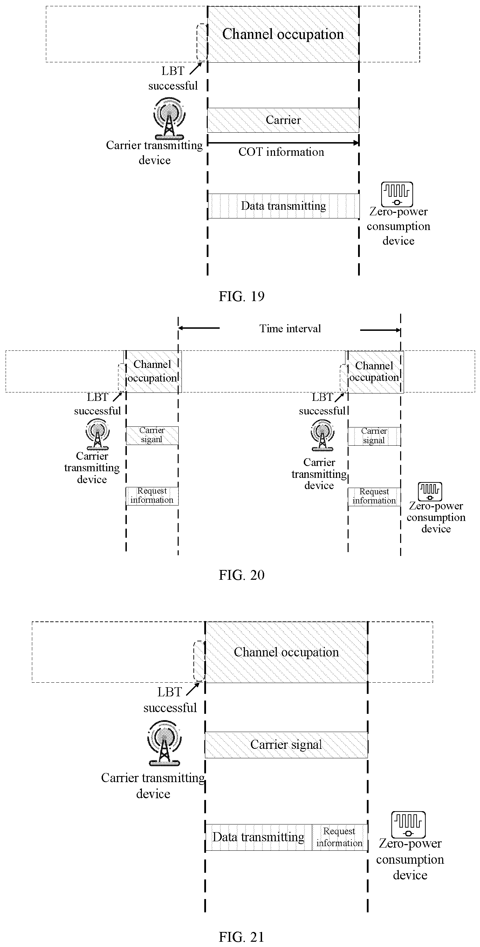

FIG. 19 is a communication schematic diagram of another example of a data transmission method according to an embodiment of the present application. As shown in FIG. 19, the zero-power consumption device may determine channel occupation time (COT) information of back scattering. The zero-power consumption device transmits data by back scattering, which may also be triggered by other devices, e.g., the scheduling of the carrier signal transmitting device, or initiated by the zero-power consumption device. Either way, transmitting data by back scattering by the zero-power consumption device needs to be completed within the COT. The COT relies on the LBT mechanism of the carrier signal transmitting device. Specifically, the COT information includes at least one of a type of channel listening, a channel priority, a total length of a channel occupation time, and a remaining length of the channel occupation time. Herein, the type of channel listening and the channel priority may determine the length of the COT. The carrier signal transmitting device may transmit the obtained COT information to the zero-power consumption device, so that the zero-power consumption device may transmit data by back scattering, such as selecting a transmission time interval, determining a data block size, a modulation method, and a data rate, and the like.

FIG. 20 is communication schematic diagram of another example of a data transmission method according to an embodiment of the present application. As shown in FIG. 20, the zero-power consumption device may transmit request information, and the request information is included in the back scattering signal. The zero-power consumption device transmits data by back scattering, which may be triggered by other devices, such as the scheduling of the carrier signal transmitting device, or initiated by the zero-power consumption device. Herein, for the back scattering transmission scheduled by other devices, a scheduling device may control the transmission of the carrier signal, to provide the zero-power consumption device with energy required for working, the carrier signal and the channel occupation time. Herein, for the transmission actively initiated by the zero-power consumption device, the carrier transmitting device is required to initiate LBT periodically, perform channel listening periodically, occupy the channel after the LBT is successful, acquire the channel occupation time, transmit the carrier signal to the zero-power consumption device during the channel occupation time, and during the channel occupation time, receive the back scattering signal including the request information transmitted by the zero-power consumption device. Herein, the request information includes: at least one of a scheduling request, a transmission duration, a data volume, a data cache status, and power control information of the first signal. Optionally, before the channel occupation time ends, the request information may be transmitted to the carrier transmitting device, so that the carrier transmitting device determines candidate channel listening and the transmission of the carrier signal.

FIG. 21 is a communication schematic diagram of another example of a data transmission method according to an embodiment of the present application. As shown in FIG. 21, the carrier transmitting device initiates LBT and performs the channel listening. After the LBT is successful, the carrier transmitting device occupies the channel, acquires the channel occupation time, transmits the carrier signal to the zero-power consumption device during the channel occupation time, and during the channel occupation time, receives the back scattering signal including the request information transmitted by the zero-power consumption device. Herein, the request information includes: at least one of a scheduling request, a transmission duration, a data volume, a data cache status, and power control information of the first signal. Optionally, before the channel occupation time ends, the request information may be transmitted to the carrier transmitting device, so that the carrier transmitting device determines candidate channel listening and the transmission of the carrier signal.

It should be pointed out that the above examples may be combined with various possibilities in the above-mentioned embodiments of the present application, which will not be repeated here.

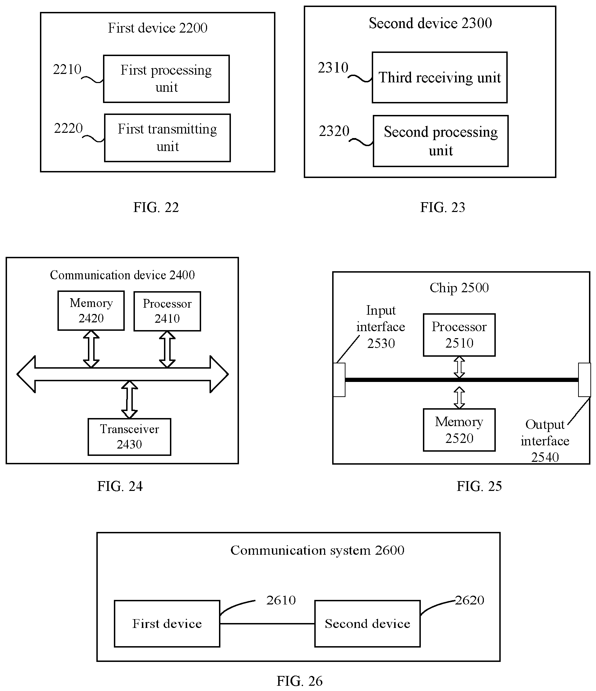

FIG. 22 is a schematic block diagram of a first device 2200 according to an embodiment of the present application. The first device 2200 may include: a first processing unit 2210, configured to perform channel listening, and perform channel occupation in a case where a result of the channel listening is that a channel is idle; a first transmitting unit 2220, configured to transmit a first signal to a second device during a first channel occupation time; the first signal is used by the second device to generate a second signal, and the second device is a zero-power consumption device.

In a possible implementation, the first device may further include a first receiving unit, configured to receive the second signal during the first channel occupation time.

In a possible implementation, the first device may further include a second receiving unit, configured to receive the second signal during a second channel occupation time; the second channel occupation time is a channel occupation time obtained by performing channel listening by the second device.

In a possible implementation, the first device may further include a second transmitting unit, configured to transmit first information related to the first channel occupation time to the second device; the first information includes: at least one of a type of the channel listening, a channel priority, a total length of a channel occupation time, and a remaining length of the channel occupation time.

In a possible implementation, the first transmitting unit is configured to acquire the first channel occupation time based on the channel listening of the first device or periodic channel listening; and transmit the first signal to the second device during the first channel occupation time.

In a possible implementation, the second signal includes request information reported by the second device; and the request information includes: at least one of a scheduling request, a transmission duration, a data volume, a data cache status, and power control information of the first signal.

In a possible implementation, the first signal carries control information; and the control information includes: at least one of a terminal identification, terminal group identification information, and a first device identification.

In some possible implementations, the first signal includes: a carrier signal.

The first device includes: at least one of a network device transmitting the carrier signal, a terminal device transmitting the carrier signal, and a device dedicated for generating the carrier signal.

The first device 2200 in the embodiments of the present application can implement the corresponding functions of the first device in the aforementioned method embodiments. The processes, functions, implementations and beneficial effects corresponding to various modules (sub-modules, units or components, etc.) in the first device 2200 may refer to the corresponding description in the above method embodiments, which will not be repeated herein. It needs to be noted that the functions described for various modules (sub-modules, units or components, etc.) in the first device 2200 of the embodiments of the application may be implemented by different modules (sub-modules, units or components, etc., or may also be implemented by a same module (sub-module, unit or component, etc.).

FIG. 23 is a schematic block diagram of a second device 2300 according to an embodiment of the present application. The second device 2300 may include: a third receiving unit 2310, configured to receive a first signal transmitted by a first device; a second processing unit 2320, configured to obtain a second signal according to the first signal during a first channel occupation time; the second device is a zero-power consumption device.

In a possible implementation, the second device further includes a fourth receiving unit, configured to receive first information related to the first channel occupation time transmitted by the first device; the first information includes: at least one of a type of channel listening, a channel priority, a total length of a channel occupation time, and a remaining length of the channel occupation time.

In a possible implementation, the second device further includes a third transmitting unit, configured to the second signal to the first device during the first channel occupation time.

In a possible implementation, the second device further includes a fourth transmitting unit, configured to transmit the second signal to the first device during a second channel occupation time; the second channel occupation time is a channel occupation time obtained by performing channel listening by the second device.

In a possible implementation, the second device further includes a third processing unit, configured to determine second information according to the first information; the second information includes: at least one of selecting a transmission time interval, determining a data block size, a modulation method, and a data rate.

In a possible implementation, the second signal includes: request information reported by the second device to the first device; and the request information includes: at least one of a scheduling request, a transmission duration, a data volume, a data cache status, and power control information of the first signal.

In a possible implementation, the second processing unit is configured to obtain control information from the received first signal; determine the first signal as a target signal, in a case where the second device identifies that the control information matches the second device itself; and obtain the second signal according to the target signal.

In a possible implementation, the control information includes: at least one of a terminal identification, terminal group identification information, and a first device identification.

The second device 2300 in the embodiments of the present application can implement the corresponding functions of the second device in the aforementioned method embodiments. The processes, functions, implementations and beneficial effects corresponding to various modules (sub-modules, units or components, etc.) in the second device 2300 may refer to the corresponding description in the above method embodiments, which will not be repeated herein. It needs to be noted that the functions described for various modules (sub-modules, units or components, etc.) in the second device 2300 of the embodiments of the application may be implemented by different modules (sub-modules, units or components, etc., or may also be implemented by a same module (sub-module, unit or component, etc.).

FIG. 24 is a schematic structural diagram of a communication device 2400 according to the embodiments of the present application. The communication device 2400 includes a processor 2410, and the processor 2410 may invoke and execute a computer program from a memory to cause the communication device 2400 to implement the method in the embodiments of the present application.

Optionally, the communication device 2400 may further include a memory 2420. Herein, the processor 2410 may invoke and execute a computer program from the memory 2420 to cause the communication device 2400 to implement the method in the embodiments of the present application.

Herein, the memory 2420 may be a separate device independent from the processor 2410, or may also be integrated into the processor 2410.

Optionally, the communication device 2400 may further include a transceiver 2430, and the processor 2410 may control the transceiver 2430 to communicate with other devices, and specifically, to be capable of transmitting information or data to other devices, or receive information or data transmitted by other devices.

Herein, the transceiver 2430 may include a transmitter and a receiver. The transceiver 2430 may further include an antenna, and a number of antennas may be one or more.

Optionally, the communication device 2400 may be the first device in the embodiments of the present disclosure, and the communication device 2400 may implement the corresponding processes implemented by the first device in respective methods of the embodiments of the present disclosure, which will not be repeated here for the sake of brevity.

Optionally, the communication device 2400 may be the second device in the embodiments of the present disclosure, and the communication device 2400 may implement the corresponding processes implemented by the second device in respective methods of the embodiments of the present disclosure, which will not be repeated here for the sake of brevity.

FIG. 25 is a schematic structural diagram of a chip 2500 according to the embodiments of the present disclosure. The chip 2500 includes a processor 2510, and the processor 2510 may invoke and execute a computer program from a memory to implement the method in the embodiments of the present disclosure.

Optionally, the chip 2500 may further include a memory 2520. Herein, the processor 2510 may invoke and execute the computer program from the memory 2520 to implement the method performed by the first device or the second device in the embodiments of the present disclosure.

Herein, the memory 2520 may be a separate device independent from the processor 2510, or may also be integrated into the processor 2510.

Optionally, the chip 2500 may further include an input interface 2530. Herein, the processor 2510 may control the input interface 2530 to communicate with other devices or chips, and specifically, to be capable of acquiring information or data transmitted by other devices or chips.

Optionally, the chip 2500 may further include an output interface 2540. Herein, the processor 2510 may control the output interface 2540 to communicate with other devices or chips, and specifically, to be capable of outputting information or data to other devices or chips.

Optionally, the chip may be applied to the first device in the embodiments of the present disclosure, and the chip may implement the corresponding processes implemented by the first device in the respective methods of the embodiments of the present disclosure, which will not be repeated here for the sake of brevity.

Optionally, the chip may be applied to the second device in the embodiments of the present disclosure, and the chip may implement the corresponding processes implemented by the second device in the respective methods of the embodiments of the present disclosure, which will not be repeated here for the sake of brevity.

The chips applied to the first device and the second device may be the same chip or different chips.

It should be understood that the chip mentioned in the embodiments of the present disclosure may also be referred to as a system on chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. Herein, the general-purpose processor mentioned above may be a microprocessor or may also be any conventional processor.

The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

FIG. 26 is a schematic block diagram of a communication system 2600 according to the embodiments of the present application. The communication system 2600 includes a first device 2610 and a second device 2620, which will not be repeated. Herein, the first device 2610 may be the carrier transmitting device, which may include: a first processing unit, configured to perform channel listening, and perform channel occupation in a case where a result of the channel listening is that a channel is idle; a first transmitting unit, configured to transmit a first signal to a second device during a first channel occupation time; the first signal is used by the second device to generate a second signal, and the second device is a zero-power consumption device. The second device 2620 may be the zero-power consumption device, which may include: a third receiving unit, configured to receive a first signal transmitted by a first device; and a second processing unit, configured to obtain a second signal according to the first signal during a first channel occupation time; the second device is a zero-power consumption device. For the sake of brevity, it will not repeated here.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of claims.

## Claims

1. A data transmission method, applied to a first device, wherein the method comprises:
performing, by the first device, channel listening, and performing channel occupation in a case where a result of the channel listening is that a channel is idle; and
transmitting, by the first device, a first signal to a second device during a first channel occupation time; wherein the first signal is used by the second device to generate a second signal, and the second device is a zero-power consumption device.

2. The method according to claim 1, further comprising:
receiving, by the first device, the second signal during the first channel occupation time.

3. The method according to claim 1, further comprising:
receiving, by the first device, the second signal during a second channel occupation time; wherein the second channel occupation time is a channel occupation time obtained by performing channel listening by the second device.

4. The method according to claim 1 or 2, further comprising:
transmitting, by the first device, first information related to the first channel occupation time to the second device;
wherein the first information comprises: at least one of a type of the channel listening, a channel priority, a total length of a channel occupation time, and a remaining length of the channel occupation time.

5. The method according to any one of claims 1 to 4, wherein transmitting, by the first device, the first signal to the second device during the first channel occupation time, comprises:
acquiring the first channel occupation time based on the channel listening of the first device or periodic channel listening; and
transmitting the first signal to the second device during the first channel occupation time.

6. The method according to any one of claims 1 to 3, wherein the second signal comprises request information reported by the second device; and
the request information comprises: at least one of a scheduling request, a transmission duration, a data volume, a data cache status, and power control information of the first signal.

7. The method according to any one of claims 1 to 6, wherein the first signal carries control information; and the control information comprises: at least one of a terminal identification, terminal group identification information, and a first device identification.

8. The method according to any one of claims 1 to 7, wherein the first signal comprises: a carrier signal; and the first device comprises: at least one of a network device transmitting the carrier signal, a terminal device transmitting the carrier signal, and a device dedicated for generating the carrier signal.

9. A data transmission method, applied to a second device, wherein the method comprises:
receiving, by the second device, a first signal transmitted by a first device; and
obtaining, by the second device, a second signal according to the first signal during a first channel occupation time; wherein the second device is a zero-power consumption device.

10. The method according to claim 9, further comprising:
receiving, by the second device, first information related to the first channel occupation time transmitted by the first device;
wherein the first information comprises: at least one of a type of channel listening, a channel priority, a total length of a channel occupation time, and a remaining length of the channel occupation time.

11. The method according to claim 9 or 10, further comprising:
transmitting, by the second device, the second signal to the first device during the first channel occupation time.

12. The method according to claim 9 or 10, further comprising:
transmitting, by the second device, the second signal to the first device during a second channel occupation time; wherein the second channel occupation time is a channel occupation time obtained by performing channel listening by the second device.

13. The method according to any one of claims 9 to 12, further comprising:
determining second information according to the first information;
wherein the second information comprises: at least one of selecting a transmission time interval, determining a data block size, a modulation method, and a data rate.

14. The method according to any one of claims 9 to 12, wherein the second signal comprises: request information reported by the second device to the first device; and
the request information comprises: at least one of a scheduling request, a transmission duration, a data volume, a data cache status, and power control information of the first signal.

15. The method according to claim 14, wherein obtaining, by the second device, the second signal according to the first signal during the first channel occupation time, comprises:
obtaining, by the second device, control information from the received first signal;
determining the first signal as a target signal, in a case where the second device identifies that the control information matches the second device itself; and
obtaining, by the second device, the second signal according to the target signal.

16. The method according to claim 15, wherein the control information comprises: at least one of a terminal identification, terminal group identification information, and a first device identification.

17. A first device, comprising:
a first processing unit, configured to perform channel listening, and perform channel occupation in a case where a result of the channel listening is that a channel is idle; and
a first transmitting unit, configured to transmit a first signal to a second device during a first channel occupation time; wherein the first signal is used by the second device to generate a second signal, and the second device is a zero-power consumption device.

18. The device according to claim 17, further comprising a first receiving unit configured to:
receive the second signal during the first channel occupation time.

19. The device according to claim 17, further comprising a second receiving unit configured to:
receive the second signal during a second channel occupation time; wherein the second channel occupation time is a channel occupation time obtained by performing channel listening by the second device.

20. The device according to claim 17 or 18, further comprising a second transmitting unit configured to:
transmit first information related to the first channel occupation time to the second device;
wherein the first information comprises: at least one of a type of the channel listening, a channel priority, a total length of a channel occupation time, and a remaining length of the channel occupation time.

21. The device according to any one of claims 17 to 20, wherein the first transmitting unit is configured to:
acquire the first channel occupation time based on the channel listening of the first device or periodic channel listening; and
transmit the first signal to the second device during the first channel occupation time.

22. The device according to any one of claims 17 to 19, wherein the second signal comprises request information reported by the second device; and
the request information comprises: at least one of a scheduling request, a transmission duration, a data volume, a data cache status, and power control information of the first signal.

23. The device according to any one of claims 17 to 22, wherein the first signal carries control information; and the control information comprises: at least one of a terminal identification, terminal group identification information, and a first device identification.

24. The device according to any one of claims 17 to 23, wherein the first signal comprises: a carrier signal; and the first device comprises: at least one of a network device transmitting the carrier signal, a terminal device transmitting the carrier signal, and a device dedicated for generating the carrier signal.

25. A second device, comprising:
a third receiving unit, configured to receive a first signal transmitted by a first device; and
a second processing unit, configured to obtain a second signal according to the first signal during a first channel occupation time; wherein the second device is a zero-power consumption device.

26. The device according to claim 25, further comprising a fourth receiving unit configured to:
receive first information related to the first channel occupation time transmitted by the first device;
wherein the first information comprises: at least one of a type of channel listening, a channel priority, a total length of a channel occupation time, and a remaining length of the channel occupation time.

27. The device according to claim 25 or 26, further comprising a third transmitting unit configured to:
transmit the second signal to the first device during the first channel occupation time.

28. The device according to claim 25 or 26, further comprising a fourth transmitting unit configured to:
transmit the second signal to the first device during a second channel occupation time; wherein the second channel occupation time is a channel occupation time obtained by performing channel listening by the second device.

29. The device according to any one of claims 25 to 28, further comprising a third processing unit configured to:
determine second information according to the first information;
wherein the second information comprises: at least one of selecting a transmission time interval, determining a data block size, a modulation method, and a data rate.

30. The device according to any one of claims 25 to 28, wherein the second signal comprises: request information reported by the second device to the first device; and
the request information comprises: at least one of a scheduling request, a transmission duration, a data volume, a data cache status, and power control information of the first signal.

31. The device according to claim 30, wherein the second processing unit is configured to:
obtain control information from the received first signal;
determine the first signal as a target signal, in a case where it is identified that the control information matches the second device itself; and
obtain the second signal according to the target signal.

32. The device according to claim 31, wherein the control information comprises: at least one of a terminal identification, terminal group identification information, and a first device identification.

33. A first device, comprising: a processor and a memory, wherein the memory is configured to store a computer program, and the processor is configured to invoke and execute the computer program stored in the memory, to cause the first device to perform the method according to any one of claims 1 to 8.

34. A second device, comprising a processor and a memory, wherein the memory is configured to store a computer program, and the processor is configured to invoke and execute the computer program stored in the memory, to cause the second device to perform the method according to any one of claims 9 to 16.

35. A chip, comprising: a processor, configured to invoke and execute a computer program from a memory, to cause a device equipped with the chip to perform the method according to any one of claims 1 to 8.

36. A chip, comprising: a processor, configured to invoke and execute a computer program from a memory, to cause a device equipped with the chip to perform the method according to any one of claims 9 to 16.

37. A computer-readable storage medium, wherein the computer-readable storage medium is configured to store a computer program, and the computer program, when being executed by a device, causes the device to perform the method according to any one of claims 1 to 8.

38. A computer-readable storage medium, wherein the computer-readable storage medium is configured to store a computer program, and the computer program, when being executed by a device, causes the device to perform the method according to any one of claims 9 to 16.

39. A computer program product, comprising computer program instructions, wherein the computer program instructions cause a computer to perform the method according to any one of claims 1 to 8.

40. A computer program product, comprising computer program instructions, wherein the computer program instructions cause a computer to perform the method according to any one of claims 9 to 16.

41. A computer program, wherein the computer program causes a computer to perform the method according to any one of claims 1 to 8.

42. A computer program, wherein the computer program causes a computer to perform the method according to any one of claims 9 to 16.

43. A communication system, comprising:
a first device, configured to perform the method according to any one of claims 1 to 8;
a second device, configured to perform the method according to any one of claims 9 to 16.
